# EUROPÄISCHE PATENTSCHRIFT

(11) **EP 0 499 115 B1**
(45) Veröffentlichungstag und Bekanntmachung des Hinweises auf die Patenterteilung: **01.05.1996**
(21) Anmeldenummer: 92101764.6
(22) Anmeldetag: 04.02.1992
(51) Int. Cl.: H01B 1/20, H01B 1/12, H01M 6/18

(54) **Polymerer Festelektrolyt**
Solid polymer electrolyte
Electrolyte polymérique solide

(30) Priorität: 09.02.1991 DE 4104008
(43) Veröffentlichungstag der Anmeldung: 19.08.1992
(73) Patentinhaber: DORNIER GMBH, D-88004 Friedrichshafen (DE)
(72) Erfinder: Braun, Rüdiger, Dr., W-7990 Friedrichshafen 24 (DE); Meisel, Thomas, Dr., W-7775 Bermatingen/Ahausen (DE); Kränzler, Thomas, Dipl.-Ing., W-7778 Markdorf (DE); Scherber, Werner, Dr., W-7775 Bermatingen (DE)
(74) Vertreter: Landsmann, Ralf, Dipl.-Ing.

(56) Entgegenhaltungen:
- EP-A- 0 392 839
- US-A- 4 888 257
- US-A- 4 978 473

## Beschreibung

Die Erfindung betrifft einen polymeren Festelektrolyten mit hoher Klebekraft (Kohäsion und Adhäsion), insbesondere zur Verwendung in elektrochromen Systemen.

Elektrolyte sind chemische Verbindungen, die im festen, flüssigen oder gelösten Zustand dissoziierte lonen enthalten. Unter Einwirkung eines elektrischer Feldes werden die lonen bewegt und somit elektrische Ladung transportiert. Einsatzgebiete für diese Technik sind u.a. die elektrochemische Abscheidung von Metallen (Galvanik), die Speicherung elektrischer Energie (Batterien, Akkus), die Erzeugung von Wasserstoff u.s.w..
Darüberhinaus finden Elektrolyte Anwendung in elektrochromen Systemen. Dabei werden Elektrolyte benötigt, die Protonen oder andere Kationen von und zur elektrochromen Elektrode transportieren, die dadurch ihre Farbe ändert.
Für diese Anwendungen in elektrochromen Systemen muß der Elektrolyt neben einer hohen Leitfähigkeit vor allem eine gute visuelle Transparenz aufweisen.

In der **DE-OS 36 43 690** ist eine elektrochrome Scheibe beschrieben, die einen transparenten Elektrolyten enthält, um eine unbeeinträchtigte Durchsicht zu ermöglichen.

In der **EP 24 544** ist ein elektrochromes Display beschrieben, das einen polymeren, wasserhaltigen Elektrolyten enthält. Der Nachteil dieses wasserhaltigen Polymerelektrolyten ist dessen beschränkte Stabilität, was insbesondere zum Verlust der Transparenz bei Temperaturen über 60°C und unter -10°C führt. Außerdem ist der Elektrolyt ätzend und weist nur geringe Kohäsion sowie geringe Adhäsion bei der Verbindung mit Substraten auf.

In der **FR 2 632 455 A1** ist ein polymerer Festelektrolyt beschrieben, der ein Copolymer aus Acrylat- und Methacrylat-Monomeren umfaßt, wobei einzelne Monomere Ethylenoxidseitenketten besitzen.

Aufgabe der Erfindung ist es, einen Elektrolyten für die Anwendung in elektrochromen Systemen zu schaffen, der innerhalb eines möglichst breiten Tempraturintervalls eine hohe Beständigkeit bezüglich seiner optischen, elektrischen, mechanischen und chemischen Eigenschaften besitzt.

Diese Aufgabe wird mit einem Polymeren Festelektrolyt, enthaltend
vernetzte oder unvernetzte Homo- oder Copolymere aus Acrylat- oder Methacrylat-Monomeren;
wobei jedes der Acrylat- oder Methacrylat-Monomere Ethylenoxidseitenketten (CH₂-CH₂-O)ₙ mit n = 2 - 15 besitzt oder
die Acrylat- oder Methacrylat-Monomere Hydroxyethylmethacrylat-Monomere sind und
bis zu 40 Gewichtsprozent eines oder mehrerer Leitsalze mit einem Kation aus Lithium,Natrium, Kalium oder Silber, wobei das Leitsalz in den Polymeren vollständig gelöst ist,
**dadurch gekennzeichnet,** daß
der Festelektrolyt bis zu 10 Gewichtsprozent organofunktionelle Silane der Formel

   CH₂ = CR₁ - CO - (OR₂)ₓ - Si(OR₃)₃

   enthält, die in die Polymere eingebaut sind, wobei
   - R₁: CₙH₂ₙ₊₁: mit n = 0,1,..,5 ,
   - R₂: CₙH₂ₙ: mit n = 1,..., 5 ,
   - R₃: CₙH₂ₙ₊₁: mit n = 0,1,...,5, oder Mischungen davon,
   und x = 1,...,5 ist,
gelöst. Die Erfindung betrifft auch Herstellungsverfahren für den Festelektrolyt.

Der erfindungsgemäße polymere Festelektrolyt enthält vernetzte oder unvernetzte Homo- oder Copolymere aus Acrylat oder Methacrylat- Monomeren, die Ethylenoxidseitenketten (CH₂-CH₂-O)ₙ mit n zwischen 2 und 15 besitzen. Die vernetzten Homo- oder Copolymere sind über diese Seitenketten vernetzt. Desweiteren enthält er in einer Konzentration von bis zu 40 Gewichtsprozent mindestens ein Leitsalz mit einem Kation einer der Elemente Lithium, Natrium, Kalium oder Silber.
Das Leitsalz ist vollständig im Polymer gelöst und verursacht somit keine Färbung des Elektrolyten. Dabei ermöglicht die Polarität der Ethylenoxidseitenketten die Dissoziation der Leitsalze. Die Anzahl n der Monomere in einer Ethylenoxidseitenkette ist auf den Bereich von zwei bis 15 beschränkt. Bei n = 1 ist das Lösungsvermögen für das Leitsalz zu gering, bei Werten von n > 15 dagegen ist der Elektrolyt nicht mehr transparent. Alternativ können die Acrylat- oder Methacrylat-Monomere auch ein Hydroxyethylmethacrylat-Monomer sein.
Erfindungsgemäß enthält der Festelektrolyt bis zu 10 Gewichtsprozent organofunktionelle Silane, die gemäß folgender Formel aufgebaut sind:

CH₂ = CR₁ - CO - (OR₂)ₓ - Si(OR₃)₃,

wobei
- R₁ : CₙH₂ₙ₊₁: mit n = 0,1,...,5 ,
- R₂ : CₙH₂ₙ:
- mit n= 1,..., 5 ,
- R₃ : CₙH₂ₙ₊₁: mit n = 0,1,...,5 oder Mischungen davon,
und x= 1,...,5 ist.

Diese reagieren mit ihrer Methycrylatgruppe über Copolimerisation mit den übrigen Monomeren. Das Silan wird in die Polymerketten mit eingebaut. Durch eine Kondensationsreaktion siliciumfunktioneller Gruppen kommt es zu einer Vernetzung des Polymers. Der Vernetzungsgrad wächst dabei mit zunehmendem Silangehalt.
Mit zunehmendem Silangehalt und somit zunehmendem Vernetzungsgrad läßt sich die Kristallisationsneigung des Polymers zu tieferen Temperaturen hin verschieben, so daß Transparenz und Leitfähigkeit des Festelektrolyten in einem vergrößerten Temperaturintervall erhalten bleiben.

Die Acrylat- oder Methacrylat-Monomere, die Silane und das Leitsalz lösen sich vollständig ineinander.
Der Elektrolyt ist glasklar mit einer Transparenz von über 90 %, weist eine Lichtstreuung von unter 2 % auf und besitzt eine Leitfähigkeit größer als 1 µS/cm (1 x 10⁻⁶ 1/Ω cm) bei 22° C. Er ist außerdem nicht ätzend und hat eine hohe Klebkraft (Kohäsion und Adhäsion), was vor allem zum Aufbringen des Elektrolyten auf Substraten von Bedeutung ist.
Seine optischen, elektrischen, mechanischen und chemischen Eigenschaften werden durch Lagerung und Betrieb bei Temperaturen zwischen -40° C bis +120° C nicht beeinträchtigt.

Je nachdem ob der Aufbau aus einem bestimmten Monomer zu einem vernetzten oder unvernetzten Polymer führt, unterscheidet man zwischen vernetzenden z.B. Ethylenglykol(400)-dimethacrylat, und nicht vernetzenden Monomeren z.B. Ethyltriglykolmethacrylat oder Ethylenglykol(400)-methacrylat.
Die Polymere aus vernetzenden Monomeren z.B. sind hart und spröde. Durch den Einbau linearer Kettenabschnitte aus nicht vernetzenden Monomeren kann deren Vernetzungsgrad herabgesetzt werden. Auf diese Weise lassen sich die mechanischen Eigenschaften, wie z.B. Elastizität, thermische Ausdehnung, aber auch die elektrische Leitfähigkeit des Elektrolyten gezielt einstellen.
Die mechanischen Eigenschaften der Polymere aus nicht vernetzenden Monomeren können durch Einstellung der Kettenlänge festgelegt werden.

Zur Herstellung des Elektrolyten wird das Leitsalz der aus einem einzelnen oder einer Mischung aus verschiedenen Monomeren bestehenden Grundsubstanz zugegeben. Die Polarität der funktionellen Ethylenoxidseitenketten ermöglicht eine Dissoziation der Leitsalze. Die Konzentration des Leitsalzes wird entsprechend seiner Löslichkeit und der gewünschten Leitfähigkeit des Elektrolyten gewählt. Zur Beschleunigung des Lösungvorgangs kann ein Lösungsmittel, zum Beispiel Acetessigester verwendet werden, das nach erfolgter Lösung wieder abgedampft wird.
Um die Grundsubstanz zu polymerisieren, kann ein Polymerisationsstarter in einer Konzentration von 0,1 bis 10 Gewichts-% zugegeben werden. Bei Verwendung eines photochemischen Polymerisationsstarters wird die Reaktion durch UV-Bestrahlung mit Wellenlängen geringer als 420 nm gestartet. Bei Verwendung des thermischen Polymerisationsstarters 2,2' -Azobis-(2-methyl-propionsäurenitril) wird die Reaktion durch eine Erhöhung der Polymerisationstemperatur auf über 60^{o} C ausgelöst. Bei Verwendung der thermischen Polymerisationsstarter tert. Butylpivalat oder tert. Butyloctat kann die Reaktion bei Raumtemperatur initiiert werden. Dies hat den Vorteil, daß die Bildung von Spannungen und eine nachträgliche Schwindung des Elektrolyten bei der Abkühlung von der erhöhten Reaktionstemperatur vermieden wird.

Wie weiter oben erwähnt wurde, können die mechanischen Eigenschaften der Polymere aus nicht vernetzenden Monomeren durch gezielt Einstellung der Kettenlänge festgelegt werden. Dies läßt sich z.B. erreichen durch geeignete Wahl der Konzentration des Polymerisationsstarters, der Polymerisationstemperatur und der Bestrahlungsintensität zur Auslösung der Polymerisation. Dazu können die beiden letztgenannten Verfahren auch in Kombination angewandt werden. Hohe Starterkonzentrationen, hohe Temperaturen, hohe Bestrahlungsintensitäten einzeln oder in Kombinationen führen zu kürzeren und somit zu niedriger schmelzenden Polymerketten.

Zur Reaktionsmischung aus Grundsubstanz, Leitsalz und Polymerisationsstarter werden die organofunktionellen Silane, z.B Methacryloxypropyltrimethoxysilan, zugegeben. Neben der schon beschriebenen Erhöhung des Vernetzungsgrads der Polymere wird durch die Zugabe der organofunktionellen Silane auch eine Erhöhung der Klebkraft des Elektrolyten auf anorganischen Substraten erreicht, indem die siliciumfunktionellen Gruppen des Silans Wasserstoffbrücken und chemischen Bindungen zu den organischen Substratoberflächen wie z.B. Indium-Zinnoxid oder mit Zinnoxid beschichteten Gläsern bilden.

Die mechanischen Eigenschaften wie Elastizität, thermische Ausdehnung können außer den weiter oben beschriebenen Methoden auch durch Zugabe von bis zu 40 Gewichts-% Weichmachern verändert werden. Die Weichmacher wirken als Quellmittel und erhöhen so die Elastizität des Polymerelektrolyten. Darüberhinaus wirken sie gleichzeitig als Lösungsmittel für das Leitsalz und tragen erheblich zur Leitfähigkeit bei. Bei hohem Weichmacherzusatz werden Leitfähigkeitswerte von mehr als 1 mS/cm erreicht. Das Polymer übernimmt in diesem Fall weitgehend nur noch mechanische Funktion.

Durch Zugabe von Antioxidantien und/oder UV-Stabilisatoren wird die Lebensdauer des Elektrolyten verbessert. Dadurch wird die Oxidation des Polymers durch Luftsauerstoff bzw. eine Schädigung durch UV-Strahlung unterbunden.

Der erfindungsgemäße Festelektrolyt eignet sich aufgrund seiner hohen visuellen Transparenz und seiner geringen Lichtstreuung vor allem für elektrochrome Anwendungen z.B. in elektrochromen Scheiben oder Folien. Darüberhinaus kann er aber auch in nichttransparenten Systemen, z.B. Primär- oder Sekundärbatterien und allgemein in Bauelementen, die elektrochemischen Ladungstransport erfordern, verwendet werden.

## Patentansprüche

1. Polymerer Festelektrolyt mit hoher Klebekraft (Kohäsion und Adhäsion), insbesondere zur Verwendung in elektrochromen Systemen, enthaltend
- vernetzte oder unvernetzte Homo- oder Copolymere aus Acrylat- oder Methacrylat-Monomeren;
- wobei jedes der Acrylat- oder Methacrylat-Monomere Ethylenoxidseitenketten (CH₂-CH₂-O)ₙ mit n = 2 - 15 besitzt oder
die Acrylat- oder Methacrylat-Monomere Hydroxyethylmethacrylat-Monomere sind;
- bis zu 40 Gewichtsprozent eines oder mehrerer Leitsalze mit einem Kation aus Lithium,Natrium, Kalium oder Silber, wobei das Leitsalz in den Polymeren vollständig gelöst ist,
**dadurch gekennzeichnet,** daß
- der Festelektrolyt bis zu 10 Gewichtsprozent organofunktionelle Silane der Formel
CH₂ = CR₁ - CO - (OR₂)_{X} - Si(OR₃)₃
enthält, die in die Polymere eingebaut sind, wobei
R₁ : CₙH₂ₙ₊₁ mit n = 0,1,...,5 ,
R₂ : CₙH₂ₙ mit n = 1,...,5 ,
R₃ : CₙH₂ₙ₊₁ mit n = 0,1,...,5, oder Mischungen davon,
und x = 1,...,5 ist.

2. Polymerer Festelektrolyt nach Anspruch 1, **dadurch gekennzeichnet,** daß die Acrylat- oder Methacrylat-Monomere folgende Stoffe sind:
- Ethyltriglykolmethacrylat,
- Ethylenglykol(400)-dimethacrylat,
- Ethylenglykol(400)-methacrylat.

3. Polymerer Festelektrolyt nach einem der vorhergehenden Ansprüche, **dadurch gekennzeichnet,** daß er mindestens eines der folgenden Leitsalze enthält:
LiCF₃SO₃, LiBF₄, LiC₁₂H₂₅SO₄, LiClO₄, NaBF₄, NaCF₃SO₃, NaClO₄, KBF₄, KCF₃SO₃, KClO₄, AgCF₃SO₃.

4. Polymerer Festelektrolyt nach einem der vorhergehenden Ansprüche, **dadurch gekennzeichnet,** daß er bis zu 40 Gewichtsprozent Weichmacher enthält.

5. Polymerer Festelektrolyt nach Anspruch 4, **dadurch gekennzeichnet,** daß die Weichmacher Polyethylenglykol und/oder Propylencarbonat sind.

6. Polymerer Festelektrolyt nach einem der vorhergehenden Ansprüche, **dadurch gekennzeichnet,** daß er Antioxidantien und/oder UV-Stabilisatoren enthält.

7. Polymerer Festelektrolyt nach Anspruch 6, **dadurch gekennzeichnet,** daß die Antioxidantien 2,6-di-tert.-butyl-p-kresol und/oder Methylen-bis-2-hydroxy-3-tert.-butyl-5-methyl-benzol sind und die UV-Stabilisatoren p-Hydroxybenzophenon und/oder Benzotriazol sind.

8. Verfahren zur Herstellung eines polymeren Festelektrolyts nach einem der vorhergehenden Ansprüche, **dadurch gekennzeichnet,** daß die Polymerisation durch eine Photoreaktion unter Verwendung eines photochemischen Polymerisationsstarters ausgelöst wird.

9. Verfahren nach Anspruch 8, **dadurch gekennzeichnet,** daß der photochemische Polymerisationsstarter 1-Hydroxycyclohexyl-phenylketon ist.

10. Verfahren zur Herstellung eines polymeren Festelektrolyts nach einem der Ansprüche 1 bis 7, **dadurch gekennzeichnet,** daß die Polymerisation durch eine thermische Reaktion unter Verwendung eines thermischen Polymerisationsstarters ausgelöst wird.

11. Verfahren nach Anspruch 10, **dadurch gekennzeichnet,** daß der thermische Polymerisationsstarter 2,2' -Azobis-(2-methyl-propionsäurenitril), Benzoylperoxid, tert.-Butylpivalat oder tert.-Butyloctat ist.

## Claims

1. Solid polymer electrolyte having a high adhesive strength (cohesion and adhesion), especially for use in electrochromic systems, containing
- crosslinked or uncrosslinked homo- or copolymers of acrylate or methacrylate monomers;
- wherein each of the acrylate or methacrylate monomers has ethylene oxide side chains (CH₂-CH₂-O)ₙ with n = 2 - 15, or
the acrylate or methacrylate monomers are hydroxyethyl methacrylate monomers;
- up to 40% by weight of one or more conducting salts having a cation of lithium, sodium, potassium or silver, the conducting salt being completely dissolved in the polymers,
characterised in that
- the solid electrolyte contains up to 10% by weight of organofunctional silanes of the formula
CH₂=CR₁-CO-(OR₂)_{X}-Si(OR₃)₃
which are incorporated in the polymers, wherein
R₁:CₙH₂ₙ₊₁ with n = 0,1,..., 5,
R₂:CₙH₂ₙ with n = 1,..., 5,
R₃:CₙH₂ₙ₊₁ with n = 0,1,..., 5, or mixtures thereof,
and x = 1,..., 5.

2. Solid polymer electrolyte according to Claim 1, characterised in that the acrylate or methacrylate monomers are the following substances:
- ethyl triglycol methacrylate
- ethylene glycol (400) dimethacrylate
- ethylene glycol (400) methacrylate.

3. Solid polymer electrolyte according to either of the preceding claims, characterised in that it contains at least one of the following conducting salts:
LiCF₃SO₃, LiBF₄, LiC₁₂H₂₅SO₄, LiClO₄, NaBF₄, NaCF₃SO₃, NaClO₄, KBF₄, KCF₃SO₃, KClO₄, AgCF₃SO₃.

4. Solid polymer electrolyte according to any one of the preceding claims, characterised in that it contains up to 40% by weight of plasticisers.

5. Solid polymer electrolyte according to Claim 4, characterised in that the plasticisers are polyethylene glycol and/or propylene carbonate.

6. Solid polymer electrolyte according to any one of the preceding claims, characterised in that it contains anti-oxidants and/or UV stabilisers.

7. Solid polymer electrolyte according to Claim 6, characterised in that the anti-oxidants are 2,6-di-tert.-butyl-p-cresol and/or methylene-bis-2-hydroxy-3-tert.-butyl-5-methylbenzene and the UV stabilisers are p-hydroxybenzophenone and/or benzotriazole.

8. Process for the manufacture of a solid polymer electrolyte according to any one of the preceding claims, characterised in that the polymerisation is initiated by a photoreaction using a photochemical polymerisation initiator.

9. Process according to Claim 8, characterised in that the photochemical polymerisation initiator is 1-hydroxycyclohexyl phenyl ketone.

10. Process for the manufacture of a solid polymer electrolyte according to any one of Claims 1 to 7, characterised in that the polymerisation is initiated by a thermal reaction using a thermal polymerisation initiator.

11. Process according to Claim 10, characterised in that the thermal polymerisation initiator is 2,2'-azo-bis-(2-methylpropionic acid nitrile), benzoyl peroxide, tert.-butyl pivalate or tert.-butyl octate.

## Revendications

1. Electrolyte solide polymère, ayant une force d'adhérence élevée (cohésion et adhérence), utilisable en particulier dans des systèmes électrochromes, contenant
- des homo- ou copolymères de monomères acrylate ou méthacrylate, réticulés ou non réticulés ;
- où chaque monomère acrylate ou méthacrylate comprend des chaînes latérales oxyde d'éthylène (CH₂-CH₂-O)ₙ où n = 2-15
ou
les monomères acrylate ou méthacrylate sont des monomères méthacrylate d'hydroxyéthyle ;
- jusqu'à 40 % en poids d'un ou de plusieurs sels conducteurs ayant un cation choisi parmi le lithium, le sodium, le potassium ou l'argent, le sel conducteur étant complètement solubilisé dans le polymère,
caractérisé par le fait que
- l'électrolyte solide comprend jusqu'à 10% en poids de silanes organofonctionnels de formule
CH₂=CR₁-CO-(OR₂)ₓ-Si(OR₃)₃,
qui sont inclus dans le polymère, où
R₁ : CₙH₂ₙ₊₁ avec n = 0,1,...,5,
R₂ : CₙH₂ₙ avec n = 1,...,5,
R₃ : CₙH₂ₙ₊₁ avec n = 0,1,...,5, ou des mélanges de ces composés,
et x= 1,...,5.

2. Electrolyte solide polymère selon la revendication 1, caractérisé par le fait que les monomères acrylate ou méthacrylate sont les substances suivantes :
- le méthacrylate d'éthyltriglycol,
- l'éthylèneglycol(400)-diméthacrylate,
- l'éthylèneglycol(400)-méthacrylate.

3. Electrolyte solide polymère selon l'une quelconque des revendications précédentes, caractérisé par le fait qu'il contient au moins un des sels conducteurs suivants :
LiCF₃SO₃, LiBF₄, LiC₁₂H₂₅SO₄, LiClO₄, NaBF₄, NaCF₃SO₃, NaClO₄, KBF₄, KCF₃SO₃, KCIO₄, AgCF₃SO₃.

4. Electrolyte solide polymère selon l'une quelconque des revendications précédentes, caractérisé par le fait qu'il contient jusqu'à 40 % en poids de plastifiant.

5. Electrolyte solide polymère selon la revendication 4, caractérisé par le fait que les plastifiants sont le polyéthylèneglycol et/ou le carbonate de propylène.

6. Electrolyte solide polymère selon l'une quelconque des revendications précédentes, caractérisé par le fait qu'il contient des antioxydants et/ou des stabilisants UV.

7. Electrolyte solide polymère selon la revendication 6, caractérisé par le fait que les antioxydants sont le 2,6-di-tert.-butyl-p-crésol et/ou le méthylène-bis-2-hydroxy-3-tert.-butyl-5-méthyl-benzène et que les stabilisants UV sont la p-hydroxybenzophénone et/ou le benzotriazole.

8. Procédé de préparation d'un électrolyte solide polymère selon l'une quelconque des revendications précédentes, caractérisé par le fait que la polymérisation est amorcée par une photoréaction, en utilisant un amorceur de polymérisation photochimique.

9. Procédé selon la revendication 8, caractérisé par le fait que l'amorceur de polymérisation photochimique est la 1-hydroxycyclohexylphénylcétone.

10. Procédé de préparation d'un électrolyte solide polymère selon l'une quelconque des revendications 1 à 7, caractérisé par le fait que la polymérisation est amorcée par une réaction thermique, en utilisant un amorceur de polymérisation thermique.

11. Procédé selon la revendication 10, caractérisé par le fait que l'amorceur de polymérisation thermique est le 2,2'-azobis-(2-méthylpropionitrile), le peroxyde de benzoyle, le pivalate de tert.-butyle ou l'octoate de tert.-butyle.
